# EUROPEAN PATENT APPLICATION

(11) **EP 4 687 020 A1**
(43) Date of publication of application: **04.02.2026**
(21) Application number: 25191518.7
(22) Date of filing: 24.07.2025
(51) Int. Cl.: G06F 3/06, G06F 12/0868

(54) **CONTROL AND MANAGEMENT OF BUFFER FOR WIDE-IO SOLID-STATE STORAGE**

(30) Priority: 01.08.2024 US 202463678529 P; 02.06.2025 US 202519226139
(71) Applicant: Samsung Electronics Co., Ltd., Suwon-si, Gyeonggi-do 16677 (KR)
(72) Inventor: LI, Zongwang, San Jose, CA, 95134 (US); YANG, Jing, San Jose, CA, 95134 (US); KI, Yang Seok, San Jose, CA, 95134 (US); PITCHUMANI, Rekha, San Jose, CA, 95134 (US)
(74) Representative: Kuhnen & Wacker Patent- und Rechtsanwaltsbüro PartG mbB

(57) **Abstract**

A system and a method for interfacing a wide-IO solid-state storage are disclosed. A buffer is configured to store data corresponding to a solid-state storage. The buffer is a first-in-first-out, FIFO, buffer. A metadata structure is configured to store metadata information including a usage scheme related to the data stored in the buffer. A buffer manager is configured to manage the buffer and the metadata structure based on the metadata information in response to an access request having an access address. The buffer manager performs an access response including one of a write access or a read access to the buffer. The access request is one of a miss or a hit.

## Description

### TECHNICAL FIELD

The disclosure generally relates to solid-state storage. More particularly, the subject matter disclosed herein relates to buffer control and management for wide-IO solid-state storage.

### BACKGROUND

The present background section is intended to provide context only, and the disclosure of any concept in this section does not constitute an admission that said concept is prior art.

Advances in data science, artificial intelligence (AI), and machine learning (ML) have led to transformative changes in technologies across various industries. To accommodate these changes, semiconductor devices and systems have also been developed with new technologies including computing architecture, processor and memory designs, network security, and communication interfaces. Among these developments, memory designs or interfaces have become more and more significant, especially in applications that require low power and small physical spaces such as mobile devices.

Among the advanced memory designs and interfaces, wide-input/output (IO) interface has become popular for three-dimensional (3D) or highly dense integrated circuits (ICs) such as low power double data rate (LPDDR) dynamic random access memory (DRAM) (e.g., LPDDR6). In addition, advances in solid-state drive (SSD) technology for flash memory have created high storage capacity for non-volatile storage devices. NAND design has become the most commonly used type in SSDs. However, designs using NAND devices to accommodate wide-IO interface have faced many challenges. These challenges include granularity incompatibility, low bandwidth utilization, long latency, high power consumption, high write amplification, and inefficient data buffering.

The above information disclosed in this Background section is only for enhancement of understanding of the background of the disclosure and therefore it may contain information that does not constitute prior art.

### SUMMARY

To overcome these issues, systems and methods are described herein for a technique of data buffering for wide-IO interfaces. The invention is set out in the appended claims. The technique aims at providing an efficient structure for interfacing a wide-IO solid-state storage. Advantages of the technique include high bandwidth utilization, low latency, low power, and efficient control of data buffering. In an embodiment, a buffer is configured to store data corresponding to a solid-state storage. The buffer is a first-in-first-out (FIFO) buffer. A metadata structure is configured to store metadata information including a usage scheme related to the data stored in the buffer. A buffer manager is configured to manage the buffer and the metadata structure based on the metadata information in response to an access request having an access address. The buffer manager performs an access response including one of a write access or a read access to the buffer. The access request is one of a miss or a hit.

### BRIEF DESCRIPTION OF THE DRAWINGS

In the following section, the aspects of the subject matter disclosed herein will be described with reference to exemplary embodiments illustrated in the figures, in which:
FIG. 1 is a block diagram illustrating a system according to an embodiment.
FIG. 2 is a diagram illustrating a low power wide-IO circuit according to an embodiment.
FIG. 3 is a diagram illustrating a buffer control and management circuit according to an embodiment.
FIG. 4 is a diagram illustrating a buffer and metadata structure according to an embodiment.
FIG. 5 is a flowchart illustrating a process for responding to access request according to an embodiment.
FIG. 6 is a flowchart illustrating a process for metadata operations according to an embodiment.
FIG. 7 is a diagram illustrating a processing system according to an embodiment.

### DETAILED DESCRIPTION

**In** the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

As used herein, the term "solid-state" in the context of storage refers to a storage technology that uses integrated circuits, instead of moving parts (e.g., spinning disks, platters, read/write heads) to store data. The term "flash memory" refers to a type of non-volatile memory which retains data even when power is removed. It is commonly used in solid-state drives (SSDs). There are two types of flash memory: NAND flash and NOR flash. The NAND flash memory has high storage density and lower cost per bit and is suitable for SSDs, mobile applications. The NOR flash is optimized for random access and is often used in applications requiring fast code execution.

As used herein, the term "buffer" in the context of storage refers to a memory device that store data or information on a temporary basis as part of an operation that involves moving data from one location to another. A buffer is typically implemented by static random-access memory (RAM) for fast access. A buffer may be organized as a standard SRAM or a first-in-first-out (FIFO) organization, i.e. it may be a FIFO buffer.

In an embodiment, a buffer is configured to store data corresponding to a solid-state storage. The solid-state storage is a wide-input/output (Wide-IO) NAND storage. The buffer is a first-in-first-out (FIFO) buffer. A metadata structure is configured to store metadata information including a usage scheme related to the data stored in the buffer. A buffer manager is configured to manage the buffer and the metadata structure based on the metadata information in response to an access request having an access address. The buffer manager performs an access response including one of a write access or a read access to the buffer. The access request is one of a miss or a hit. In one embodiment, the usage scheme corresponds to a buffer data item and includes at least one of a valid indicator that indicates a valid status, a dirty indicator that indicates a modified status, and a relocation indicator that indicates a relocation status.

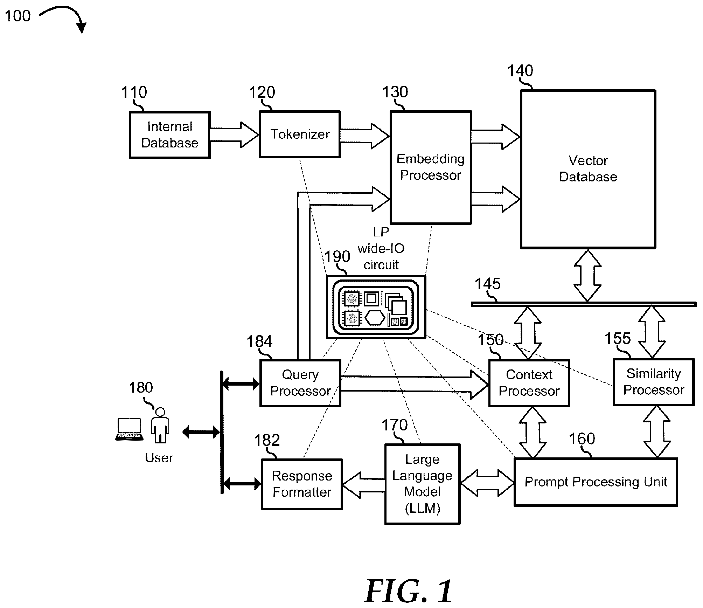

FIG. 1 is a block diagram illustrating a system 100 according to an embodiment. The system 100 illustrates the important role of low power wide-IO solid-state storage devices in a typical AI application. The AI application in the system 100 is a machine learning system with a large language model (LLM). The LLM performs inference and typically includes two main parts: prompt processing and generating response to queries. In a typical application, the LLM needs to fetch huge amounts of data representing model parameters and forward to appropriate processing elements such as central processing unit (CPU), graphics processing unit (GPU), and neural processing unit (GPU), and specialized processors including applications specific integrated circuits (ASICs). The memory requirements for the LLM-based system include high bandwidth RAM and wide-IO NAND flash memory devices.

The system 100 includes an internal database 110, a tokenizer 120, an embedding processor 130, a vector database 140, a connectivity link 145, a context processor 150, a similarity processor 155, a prompt processing unit 160, a large language model (LLM) 170, a response formatter 182, a query processor 184, a user 180, and low power (LP) wide-IO storage circuit 190. The system 100 may include more or less than the above components. The system 100 illustrates an exemplary architecture of an artificial intelligence (AI) query-and-response application. This query-and-response application receives queries from the user 180 and provides the response using the LLM 170. This type of application may be implemented by hardware or software or a combination of both. The reason why this application is used as an example to illustrate the role of the wide-IO solid state storage (e.g., NAND devices) is that it uses very large computational resources including large storages for data and high computations. Whether it is implemented by hardware, software, or a combination of both, the basic component of the system is a low power wide-IO solid-state storage circuit 190 that may be used with processing circuit to perform all or parts of the functions of the tokenizer 120, the embedding processor 130, the context processor 150, the similarity processor 155, the prompt processing unit 160, the LLM 170, the response formatter 182, and the query processor 184. Some of the components may be parts of other components. For example, the tokenizer 120 and the embedding processor 130 may be parts of the LLM 170.

The internal database 110 is a database that stores data or information that is private to an organization and is not available publicly. The query session may be used by an employee of a company and therefore the data may be private or proprietary to the company. The internal database 110 may not be needed if the query is for public information. The tokenizer 120 processes the data from the internal database 110 and prepares for use in subsequent stages. A typical input is a text or a sentence. The tokenizer 120 breaks the text into smaller units, called tokens, which may be a word or a phrase, or a form that can be processed by other units. Typically, this task may include extracting relevant information from the text and represent this information by meaningful numbers. This may be performed by a special program, or a special circuit which may be implemented in an applications-specific integrated circuit (ASIC). Such an ASIC would need to have fast access to memories which store the texts and the tokens. Wide-IO NAND flash devices with interfaces to LPDDR6 devices are useful for this purpose.

The embedding processor 130 operates on the output of the tokenizer and the query processor to convert this textual representation into a numeric representation that follows some predefined format. The embedded representation typically has several fields of numbers which may correspond to relevance, relationship, or any characteristics that are useful for processing. These embedded representations typically form vectors. For example, the textual representation "I love New York" may be embedded into a vector having five fields: [0.312, -7.215, 3.126, - 0.015, 2.761]. The embedding process may be implemented in hardware using an LP wide-IO circuit 190 including a processing circuit that calculates the vector representation and storage elements that store information retrieved from the internal database 110. The resulting vectors may be stored in the vector database 140 or may be processed with data read from the vector database 140. The vector database 140 store vectors that represent domain knowledge and/ or the query. The output of the vector database 140 may be passed to the context processor 150 and the similarity processor 155 via the connectivity link 145 for further processing. The connectivity link 145 may be a bus, a network connection, or any medium that allows data transfers between the vector database 140 and other devices including the context processor 150 and the similarity processor 155.

The context processor 150 provides contextual information to the query or queries. It receives query information from the query processor 184. The contextual information expands the meaning of the query or queries to include information that is relevant to the content of the query or queries and/or user's background and experience. For example, the queries "What is the capital of California?" "What to do in Central California?" and "Where is Yosemite?" may create a context of traveling. This context will obtain vectors that are related to traveling in California including lodging information and attractions. The context processor 150 therefore requires fast computation to perform searches and matching. It also needs a large memory space to store data. The similarity processor 155 performs matching of candidate vectors to the query vector or vectors to locate the vectors that are most relevant to the query. Depending on the format of the query, an appropriate similarity measure may be determined. For example, for vectors with many numerical values, a cosine similarity may be used. This similarity measure requires calculating an inner product and magnitudes of two vectors. When searching for relevant vectors, thousands of such computations may be performed. This number of computations necessitates an ASIC dedicated for similarity computations. Accordingly, the similarity processor 155 may be efficiently implemented by multiple highly integrated circuits that include computational elements in forms of ASIC chiplets for fast and parallel computations. In addition, it should also have a large memory capacity and wide-IO interfaces to provide fast access to the vectors. Both the context processor 150 and the similarity processor 155 would also need efficient input/output (IO) circuits to perform fast data transfers to and from the vector database 140 and the prompt processing unit 160.

The prompt processing unit 160 receives results from the context processor 150 and the similarity processor 155 to further provide guidance to steer the LLM 170 to the appropriate direction. Due to the amount of vast information processed by the LLM 170, there is a good chance that the LLM 170 strays into off topic areas, referred to as hallucinations. The prompt processing unit 160 narrows down the search space, based on the contextual information from the context processor 150 and the candidate vectors from the similarity processor 155 and additional information such as user's profile, background, or experience. The prompt processing unit 160 may import domain-specific knowledge data to generate proper directions for the query. It may interact with the context processor 150 and the similarity processor 155 in generate prompts to the LLM 170. Accordingly, it would need a highly integrated system or processing elements and localized memory and IO or interface circuits including low power wide-IO solid-state storage circuits.

The LLM 170 obtains results from the prompt processing unit 160 including those of the context processor 150 and the similarity processor 155 to generate a response to the query. It also receives query information from the query processor 184. The LLM 170 includes a transformer model having computations that are partly offloaded to the tokenizer 120, the embedding processor 130, the context processor 150, and the similarity processor 155. It includes an encoder and decoder structure to create and process a contextualized representation of the query, a training model to learn the meaning of the query and process the query, an inference engine to reason for a proper response, and a fine-tuning structure to refine the responses based on the results of the context processor 150 and the similarity processor 155. Typically, the LLM 170 involves a massive amount of memory space and computations. Many of the computations may be performed in parallel where there is little or no dependency. Accordingly, the LLM 170 would need multiple highly integrated packages having several computational and memory elements with specific algorithms. This is most efficient by multiple ASICs with direct accesses to local memory devices.

The response formatter 182 receives one or more responses from the LLM 170. These responses correspond to the user query or queries. The response formatter 182 formats these responses in proper format and presentation style which may include graphics and animation. The result is then delivered to the user 180. Due to the amount of computations and IO interactions, the response formatter 182 is best implemented by a highly integrated subsystem 190 which includes multiple processors, memory (e.g., LPDDR6), wide-IO solid state storage devices, and IO circuits.

The query processor 184 processes the query from the user 180. This process may include tokenization as done by the tokenizer 120 and other formatting operations to convert the user's query into a form that can be further processed. The results of the query processor 184 are delivered to the embedding processor 130, the context processor 150, and the LLM 170. Though the computations in the query processor 184 may or may not be extensive, it often needs fast processing time and specialized procedures. Accordingly, the query processor 184 is best implemented by a highly integrated subsystem multiple processors, memory (e.g., LPDDR6), low power wide-IO solid-state storage circuits, and and IO circuits.

The user 180 may be any user of the system and may include an individual, a team of people, or a computerized process. The user 180 may have a query that is in the public domain an expect the results to be obtained from the public domain. The user 180 may also be a user who has a private query that is particularized for the platform the user 180 is using. For example, the user 180 may be an individual who is interested in knowing the products offered by a company XYZ. As another example, the user 180 may belong to an organization such as a union or an association who want to query a particular subject that is relevant only to that organization. Under this private setting, the internal database 110 is relevant.

The LP wide-IO solid-state storage circuit 190 provides highly integrated resources for the various storage components in the system 100. These resources may include memory for computations, data storage, processing operations, and other specialized functions. The LP wide-IO solid-state storage circuit 190 may be used in any one of the tokenizer 120, the embedding processor 130, the context processor 150, the similarity processor 155, the prompt processing unit 160, the LLM 170, the resource formatter 182, or the query processor 184, or any combination of these elements,

The system 100 is an example that illustrates the role of LP wide-IO solid-state storage circuits in high computing (HC) platforms. The use of a query application in AI shows that many HC platforms require several LP wide-IO solid-state storage circuits, including Wide-IO NAND SSD operating in conjunction with processing units or IO circuits. In many cases, the environment of the applications adds additional requirements including low power consumption, reliable signal integrity, fault-tolerance, and reliable operations in extreme conditions including heat and tight space. Examples of other applications that would benefit from a highly integrated wafer design include mobile communication (e.g., smart phones, base stations, user equipment), cameras, vehicles, entertainment (e.g., games, multimedia, music, movies), technical designs (e.g., animation, graphics), medical (e.g., visualization, medical imaging), robotics, drones, automatic test equipment, audio processing, speech synthesizer, video and image analysis, vision, automatic face recognition, artificial intelligence (AI) applications, and data centers.

In the following, the description will focus on several embodiments of the low power wide-IO storage circuit 190. These embodiments may be combined to provide highly integrated and versatile memory circuits.

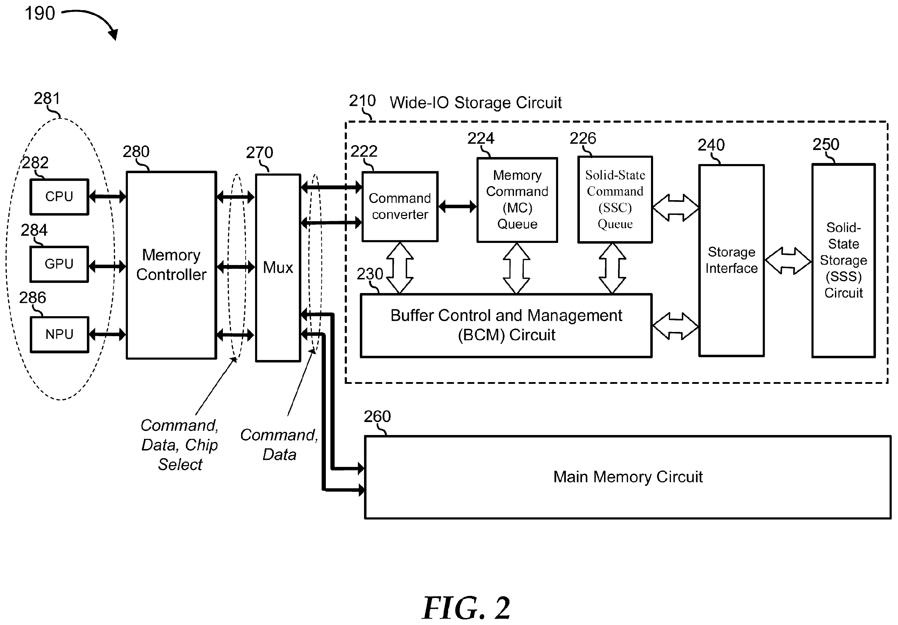

FIG. 2 is a diagram illustrating the low power (LP) wide-IO circuit 190 shown in FIG. 1 according to an embodiment. The low power (LP) wide-IO circuit 190 includes a wide-IO storage circuit 210, a main memory circuit 260, a multiplexing circuit (MUX) 270, and a memory controller 280. The LP wide-IO circuit 190 may include more or less than the above components. The LP wide-IO circuit 190 maintains interface compatibility with existing wide-IO DRAM interfaces to minimize modifications and ensure reliable performance. It also improve the access time due to the granularity between the main memory in the main memory circuit 260 and the solid-state storage in the wide-IO storage circuit 210.

The wide-IO storage circuit 210 includes circuits to provide wide-IO data access to SSD storage. It may be referred to as Rank 1 device in a memory extension organization. It is configured to operate together with the main memory circuit 260 or existing memory devices in a wide-IO configuration.

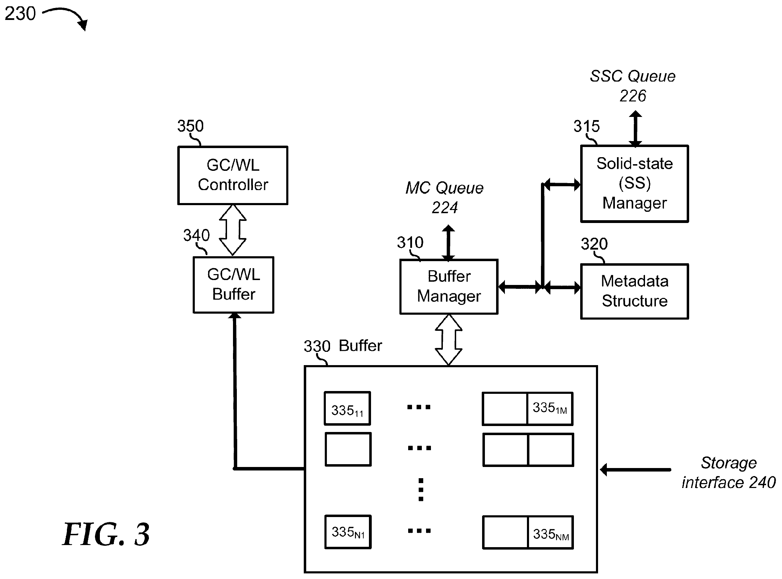

The wide-IO storage circuit 210 includes a command converter 222, a memory command (MC) queue 224, a solid state command (SSC) queue 226, a buffer control and management (BCM) circuit 230, a storage interface 240, and a solid-state storage (SSS) circuit 250. The wide-IO storage circuit 210 may include more or less than the above components. The command converter 222 converts commands from the memory controller 280 to appropriate commands to the SSS circuit 250. The DRAM in the main memory circuit 260 has a small granularity (e.g., 64 bytes) while the granularity in the SSS circuit 250 is large (e.g., 16 KB) due to the wide-IO format. The MC queue 224 stores commands converted from the command converter 222, formats and arranges them in proper forms and order, and the schedules their execution. The SSC queue 226 stores commands from the BCM circuit 230 and interacts with the storage interface 240 to access the SSS circuit 250. The BCM 230 provides a structure to allow the SSS circuit 250 to interface with the wide-IO interface with the main memory circuit 260 and the memory controller 280. In addition, the BCM 230 provides solutions to the wide-IO interface using NAND devices to achieve low power, fast latency and high bandwidth utilization. The BCM 230 will be described further in FIGS 3. 4, 5, and 6. The storage interface 240 provides interface to the SSS circuit 250 including receiving commands and data and transmitting data. The SSS circuit 250 is a solid-state storage circuit having a wide-IO configuration. It has NAND devices as the storage elements. It is referred to as a high-bandwidth NAND (HBN). As mentioned above the wide-IO NAND devices in the SSS circuit 250 has a large granularity.

The main memory circuit 260 includes memory devices used as a main memory for the processing circuit 190. It is typically referred to as Rank 0 device in a memory extension organization. It may include fast DRAM devices, including LPDDR6 devices at speed 10.6 Gbps and beyond. The DRAM devices may have a bus data bus width of 24 bits. As mentioned above, the DRAM devices have a small granularity. The DRAM devices may be organized to comply with the Wide-IO standard. The devices may include stacked (3D) or 2.5D integration with logic circuits to increase bandwidth, low latency, with lower signal interferences, suitable for mobile applications. The Wide-IO may utilize a wide bus width of up to 1024 bits.

The MUX circuit 270 provides multiplexing control and communication to the memory controller 280. The MUX circuit 270 transfer control signals and data including commands, chip selects, enables, and data. The memory controller 280 interfaces with processing devices or hosts 281 including a CPU 282, a GPU 284, and an NPU 286. The interface may be any suitable interface that allows communication through channels for read and write transactions. In one embodiment, the interface is an Advanced eXtensible Interface (AXI). These processing elements may issue command signals such as access request for reads and writes to the main memory circuit 260

FIG. 3 is a diagram illustrating the BCM circuit 230 shown in FIG. 2 according to an embodiment. The BCM circuit 230 is configured to solve problems in direct access to an HBN such as long latency and complicated control structure. In addition, the BCM circuit 230 maintains compatibility with the existing wide-IO interface so that no modifications are necessary to include the HBN in the circuit. The main features of the BCM circuit 230 include: (1) a cache-like organization for fast access, (2) a metadata structure to provide easy control and response to access requests, (3) a first-in-first-out (FIFO) buffer to provide simple mechanism for replacement, and (4) a set of functionalities configured specifically to deal with the particular issues of the HBN such as eviction, relocation, and garbage collection. The BCM circuit 230 includes a buffer manager 310, a solid-state (SS) manager 315, a metadata structure 320, a buffer 330, a garbage collection/wear leveling (GC/WL) buffer 340, and a GC/WL controller 350. The BCM circuit 230 may include more or less than the above components.

The buffer manager 310 is configured to manage the buffer 330 and the metadata structure 320 based on the metadata information in response to an access request having an access address. It interfaces with the MC queue 224 to receive the access commands from the memory controller 280. The access request may come from any one of the processing elements such as the CPU 282, the GPU 284, or the NPU 286 shown in FIG. 2. When any one of these units performs an access request, the access request is routed to the wide-IO storage circuit 210 (in FIG. 2) which will be handled by the buffer manager 310. The object of the access request, the data item, may or may not be present in the buffer 230. When the data is not in the buffer, the access request results in a miss. If the data is in the buffer, the access request results in a hit. Depending on whether the access is a miss or a hit and the status of the corresponding data item, the buffer manager will perform suitable operations to maintain data coherency between the buffer 230 and the SSS circuit 250. The buffer manager 310 manages the operations of the buffering mechanism of caching data from the HBN in the SSS circuit 250. It may include logic circuits to perform control functions for reading data from the buffer 330 or the SSS circuit 250 and writing data to the buffer 330 or the SSS circuit 250. The buffer manager 310 may perform an access response including one of a write access or a read access to the buffer 330. In addition, the buffer manager 310 updates the metadata information according to the result of each access.

The SS manager 315 manages the accesses to the SSS (e.g., the wide-IO NAND devices) in the SSS circuit 250. It interfaces with the SSC queue 226 to provide the SS commands to the wide-IO NAND devices. The metadata structure 320 is configured to store metadata information related to the status of the data items in the buffer 330. The metadata information includes a usage scheme related to the data stored in the buffer 330. The usage scheme corresponds to a buffer data item and includes at least one of a valid indicator that indicates a valid status, a dirty indicator that indicates a modified status, and a relocation indicator that indicates a relocation status. The significance of these indicators or status bits will be explained later.

The buffer 330 is a low power (LPW) storage. It is configured to store data corresponding to the SSS circuit 250. It is a first-in-first-out (FIFO) buffer that stores data on a first-in-first-out basis. The FIFO buffer is organized as a cache having a N-way set associative structure. The depth of the FIFO buffer is N, the number of ways in the structure. The buffer 330 include NxM blocks 335ᵢⱼ where i = 1, ..., N and j = 1, ..., M, N and M are positive integers. The FIFO organization of the FIFO buffer helps reduce complexity and hardware cost and therefore reduces power consumption. The logic circuit in the buffer manager 310 provides control on the buffer 330. Examples of the control functions include issuing a read request to the wide-IO NAND devices in the SSS circuit 250, returning data from the wide-IO NAND devices in the SSS circuit 250 to any one of any one of the hosts 861, and performing the access response to the buffer 330.

The GC/WL buffer 340 stores buffer data items from the buffer 330 as part of the GC/WL operation. GC/WL is an operation particularized to NAND flash memory devices in two contexts. In the first context, a NAND needs to erase a data block before writing a new data item to the block. The data to be erased needs to be transferred to another location so that its previous location can be erased together with other invalid blocks. All of these data can be collected in the GC/WL buffer 340 so that they can be reused without accessing the SSS circuit 250. In the second context, the relocation bit or flag may indicate a data item at a location needs to be relocated because the location has been accessed too many times which may cause degradation to the data cells. In essence, when data cells at a certain location have received too many program/erase (P/E) cycles, the data cells will become worn out and degraded. The data, therefore, needs to be moved or relocated to another location. As in the first context, all data marked with the relocation status or flag bits will be collected in the GC/WL buffer 340 so that they can be reused without accessing the SSS circuit 250. The result is fast processing time and efficient control of data movements.

The GC/WL controller 350 controls the writing to, and reading from, the GC/WL buffer 340. The control function may include initiating the GC process, grouping the data, issuing read or write requests to the solid-state storage circuit 250, and communicating with other circuits or sections. Since GC involves moving data around, it is time-consuming and therefore it is typically performed when the wide-IO storage circuit 210 is not actively used in a memory cycle. This can be done in a background mode.

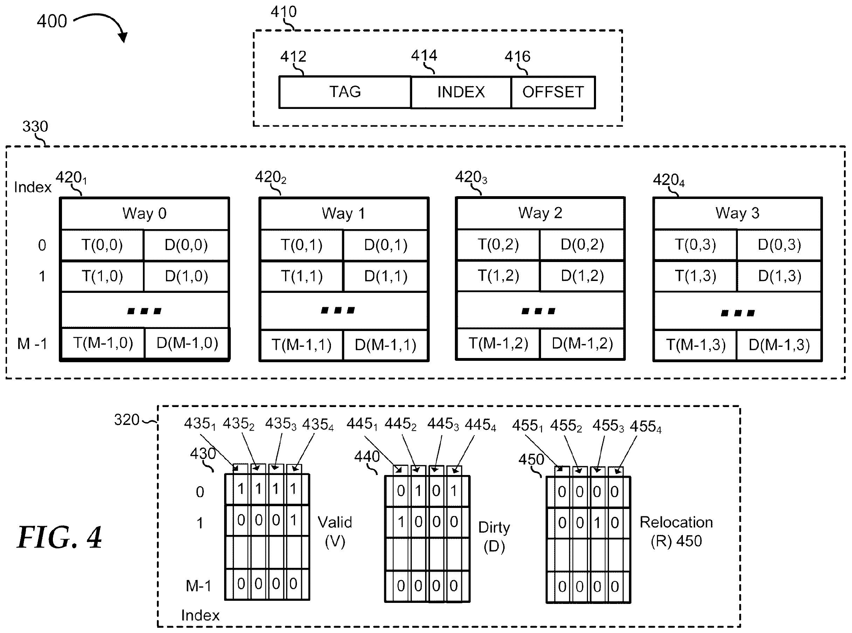

FIG. 4 is a diagram illustrating a structure 400 including the metadata structure 320 and the buffer 330 shown in FIG. 3 according to an embodiment. The structure 400 includes an access address 410, the buffer 330, and the metadata structure 320. The structure 400 is for illustrative purposes only and do not necessarily depict the exact circuit.

The access address 410 refers to the address of the memory location in the access request issued by the hosts 861. It includes a tag 412, an index 414, and an offset 416, similar to address fields in cache memory. The offset 416 specifies the byte in a cache line. The index 414 determines the set. The tag 412 determines the block in the specified set. The tag 412 will be compared with the tag stored in the buffer 330 to determine if there is a hit or a miss.

The buffer 330 is shown as having a 4-way set associative organization or structure. It includes 4 arrays corresponding to the 4 ways 420₁, 420₂, 420₃, and 420₄. Each row of each array stores the tag field T(i,j) and the data field D(i,j) where i= 0, M-1 and j=0, 3. Each row of the 4 arrays 420₁, 420₂, 420₃, and 420₄ corresponds to an index number.

The metadata structure 320 is organized in the same manner as the buffer 330 to store metadata information. The metadata information includes status bits or flags associated with a data item in the buffer 330. The usage scheme corresponds to a data item in the buffer 330 and includes at least one of a valid indicator, bit, or flag that indicates a valid status; a dirty indicator, bit, or flag that indicates a modified status; and a relocation indicator, bit, or flag that indicates a relocation status. A valid status, when asserted, reflects that the data item at the access address is valid and has been properly read, stored, or updated. An invalid status indicates that the data item at the accessed location is invalid or has not been properly stored or written. The dirty status indicates that the data item has been modified or written over and its value has been changed from the original value when it was first loaded or from the last updated value in a valid status. A relocation status indicates that the data item needs to be relocated to be transferred to another location because its integrity may be compromised due to excessive P/E cycles. The metadata structure 320 has three arrays 430, 440, and 460 corresponding to the valid statuses, the dirty status, and the relocation status, respectively. Each row of each array corresponds to the index as in the buffer 330. Each array has four columns corresponding to four ways in the 4-way associative set buffer 330. Columns 435ⱼ, 445ⱼ, and 455ⱼ where j = 1, ..., 4 corresponds to the V, D, and R statuses, respectively, of way j-1. For example, the status 435₄ at index 1 is a valid status of way 3 with a value of 1. The status indicators 435ⱼ's, 445ⱼ's, and 455ⱼ's are updated by the buffer manager 310 every time an access operation results in a status change.

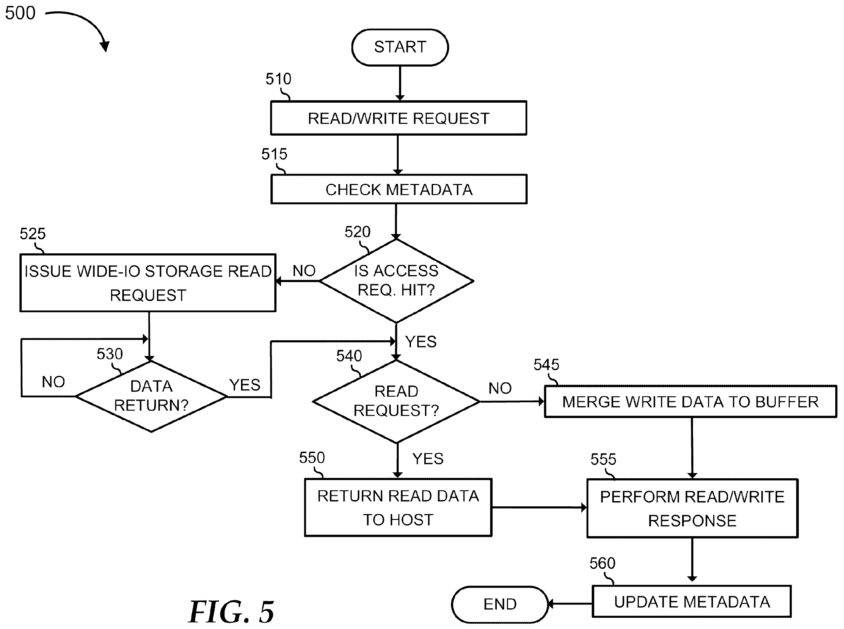

FIG. 5 is a flowchart illustrating a process 500 for responding to access request according to an embodiment.

Upon START, the process 500 receives an access request from a host (Block 510). The access request may be a read access or a write access. The request may be transmitted from the host 861 to the MUX 270 and to the command converter 222 and then to the BCM circuit 230. Then, the process 500 checks the metadata information (Block 515). The metadata information includes the miss/hit, valid, dirty, and relocation bits. Then, the process 500 determines if there is a hit in the access request (Block 520) The determination of hit/miss is based on a comparison between the tag field of the address in the request and the tags stored in the buffer 330. If there is a match, a hit is declared. Otherwise, a miss is declared. If there is a miss (NO at block 520), the process 500 issues a read request to the wide-IO storage circuit or the HBN (Block 525). This read request is performed whether or not the access request is a read access or write access. The reason why it is still necessary to do a read request even when the host requests a write is that the write data may be of different size (e.g., 8 bits) than the word size and it is necessary to combine or merge the write data with its nominal size of the data. Next, the process 500 determines if the data is returned from the HBN (Block 530). If not, the process 500 loops back to Block 530 to wait for the data to be returned. The process 500 may invoke an error handling procedure if the data is not returned after some predefined time period.

If the data is returned successfully, the process 500 determines if the host access request is a read request (Block 540). If so (YES at Block 540), the process 500 returns the read data to the host (Block 550) and proceeds to perform read/write response as normal (Block 555). This may include pushing the read data to the buffer 330. Next, the process 500 updates the metadata information corresponding to the access address (Block 560). This may include asserting or de-asserting the metadata status bits. For example, after a read miss and the data is loaded to the buffer, the status bit may be updated to change from invalid to valid. The process 500 is then terminated.

If the host access request is a write request (NO at Block 540), the process 500 merges the write data to the data read from the HBN (for a write miss) or to the data read from the buffer (for a write hit). Then, the process 500 proceeds to block 555 to perform read/write response as above. Next, the process 500 updates the metadata information corresponding to the access address (Block 560) and is then terminated.

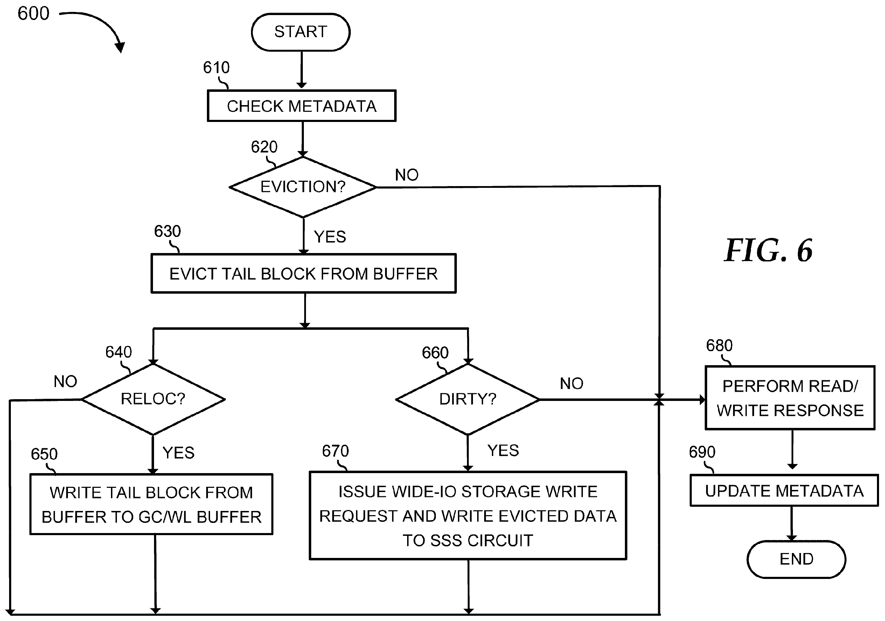

FIG. 6 is a flowchart illustrating a process 600 for metadata operations according to an embodiment. For illustrative purposes, the process 600 is shown as a standalone process. In practice, the process 600 is performed in conjunction with the process 500 or any other process that services an access request, either read or write, from the host. The process 600 may be incorporated to any other process when metadata operations are involved, especially the dirty and relocation status bits.

Upon START, the process 600 checks the metadata information in the metadata structure (Block 610). Then, the process 600 determines if there is an eviction (Block 620). An eviction occurs when there is no more space in the buffer 330 to accept new data. When this happens, a data item in the buffer will be evicted to make room available for the new data. If there is no eviction (NO at block 620), the process 600 proceeds to perform the read/write response as appropriate (Block 680), update the metadata as necessary (Block 690) and is then terminated.

If there is an eviction (YES at block 620), the process 600 evicts the tail block from the buffer (Block 640). Next, the process 600 determines if the status of the evicted data is dirty or relocation. The determination may be done separately and in parallel. The determination logic or checking circuit includes a logic circuit that can perform logic operations based on the status bits of the metadata independently and in parallel. While the flowchart may show a sequential procedure, operations or blocks in the process 600 can be carried out in parallel. In particular, the checking of relocation and dirty statuses may be done at the same time. In some cases, the process 600 may just do relocation due to read disturbing. In other cases, the process 600 may need to write back data to the storage circuit due to write dirty. In some rare cases, the process 600 may need to process both relocation and dirty statuses together. At block 640, the relocation status is checked. If there is no relocation, the process 600 goes to block 680. If not (YES at block 640), the process 600 writes the tail block from the buffer to the GC/WL buffer (Block 650). The GL/WL controller 350 (in FIG. 3) will handle the GC operation. The data marked with the relocation status bit that has been moved to the GC/WL buffer will be reused as appropriate without the need to store them in the SSS circuit 250. The process 600 then goes to block 680. At block 660, the dirty status in the metadata is checked. If there is no dirty status or the dirty bit is negated or de-asserted, the process 600 go to block 680. If not (YES at Block 660), the process 600 issues a wide-IO storage write request to the SSS circuit and writes the evicted data to the SSS circuit (Block 670) and goes to Block 680.At Block 680, the process 600 performs the read/write response as appropriate (Block 680). Next, the process 600 updates the metadata information (Block 690) and is then terminated.

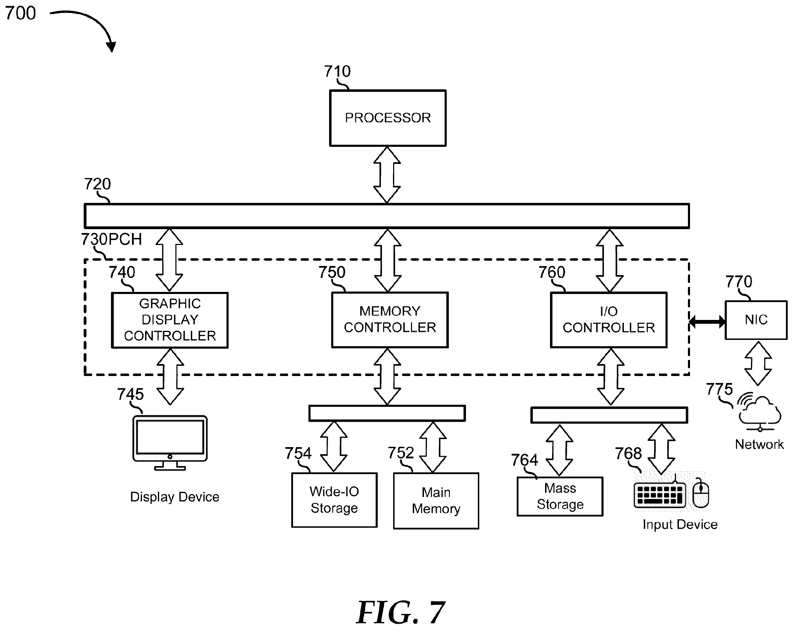

FIG. 7 is a diagram illustrating a computing or processing system 700 according to an embodiment. The computing system 700 may be a system in which the wide-IO storage circuit may be deployed. It may supplement or replace any one or more of the blocks shown in FIG. 1. It includes a central processing unit (CPU) or a processor 710, a bus 720, and a platform controller hub (PCH) 730. The PCH 730 may include a graphic display controller (GDC) 740, a memory controller 750, and an input/output (I/O) controller 760. The processing system 700 may include more or less than the above components. In addition, a component may be integrated into another component. As shown in FIG. 7, all the controllers 740, 750, and 760 are integrated in the PCH 730. The integration may be partial and/or overlapped. For example, the GDC 740 may be integrated into the processor 710, the I/O controller 760 and the memory controller 750 may be integrated into one single controller, etc.

The processor 710 is a programmable device that may execute a program or a collection of instructions to carry out a task. It may be a general-purpose processor, a digital signal processor, a microcontroller, or a specially designed processor such as one design from Applications Specific Integrated Circuit (ASIC). It may include a single core or multiple cores. Each core may have multi-way multi-threading. The processor 710 may have simultaneous multithreading feature to further exploit the parallelism due to multiple threads across the multiple cores. In addition, the processor 710 may have internal caches at multiple levels. It may be the CPU 282 in FIG. 2

The bus 720 may be any suitable bus connecting the processor 810 to other devices, including the PCH 730. For example, the bus 720 may be a Direct Media Interface (DMI).

The PCH 730 in a highly integrated chipset that includes many functionalities to provide interface to several devices such as memory devices, input/output devices, storage devices, network devices, etc.

The I/O controller 760 controls input devices 768 (e.g., stylus, keyboard, and mouse, microphone, image sensor) and output devices (e.g., audio devices, speaker, scanner, printer), and a mass storage 764. The mass storage 764 may also include CD-ROM, hard disk, and SSDs. It also has a network interface card (NIC) 770 which provides an interface to a network and wireless medium 775.

The memory controller 750 controls memory devices such as a main memory 752 and a wide-IO storage 754. The main memory 752 includes random access memory (RAM) and/or the read-only memory (ROM) and other types of memory such as the cache memory or an SSD. The main memory 752 may store instructions or programs, loaded from a mass storage device, that, when executed by the processor 710, cause the processor 710 to perform operations as described above. It may also store data used in the operations. The ROM may include instructions, programs, constants, or data that are maintained whether it is powered or not. The instructions or programs may correspond to the functionalities described above.

The GDC 740 controls a display device 745 and provides graphical operations. It may be integrated inside the processor 710. It typically has a graphical user interface (GUI) to allow interactions with a user who may send a command or activate a function.

Additional devices or bus interfaces may be available for interconnections and/or expansion. Some examples may include the Peripheral Component Interconnect Express (PCIe) bus, the Universal Serial Bus (USB), etc.

All or part of an embodiment may be implemented by various means depending on applications according to particular features, functions. These means may include hardware, software, or firmware, or any combination thereof. A hardware, software, or firmware element may have several modules coupled to one another. A hardware module is coupled to another module by mechanical, electrical, optical, electromagnetic or any physical connections. A software module is coupled to another module by a function, procedure, method, subprogram, or subroutine call, a jump, a link, a parameter, variable, and argument passing, a function return, etc. A software module is coupled to another module to receive variables, parameters, arguments, pointers, etc. and/or to generate or pass results, updated variables, pointers, etc. A firmware module is coupled to another module by any combination of hardware and software coupling methods above. A hardware, software, or firmware module may be coupled to any one of another hardware, software, or firmware module. A module may also be a software driver or interface to interact with the operating system running on the platform. A module may also be a hardware driver to configure, set up, initialize, send and receive data to and from a hardware device. An apparatus may include any combination of hardware, software, and firmware modules.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. An apparatus comprising:
a first-in-first-out, FIFO, buffer configured to store data corresponding to a solid-state storage;
a metadata structure configured to store metadata information including a usage scheme related to the data stored in the buffer; and
a buffer manager configured to manage the buffer and the metadata structure based on the metadata information in response to an access request having an access address,
wherein the buffer manager performs an access response including one of a write access or a read access to the buffer, and
wherein the access request is one of a miss or a hit.

2. The apparatus of claim 1, wherein the usage scheme corresponds to a buffer data item and includes at least one of a valid indicator that indicates a valid status, a dirty indicator that indicates a modified status, and a relocation indicator that indicates a relocation status.

3. The apparatus of claim 1 or 2, wherein the solid-state storage is a wide-input/output, Wide-IO, NAND storage.

4. The apparatus of any one of claims 1 to 3, wherein upon a miss, the buffer manager issues a read request to the solid-state storage to obtain storage data.

5. The apparatus of claim 4, wherein in response to a write access having a write data, the buffer manager merges the write data to the storage data and performs the access response to the buffer.

6. The apparatus of claim 4 or 5, wherein in response to a read access, the buffer manager returns the storage data to a host and performs the access response to the buffer.

7. The apparatus of any one of claims 1 to 6, wherein in an eviction operation, the buffer manager evicts a buffer data item in a tail block from the buffer.

8. The apparatus of claim 7, wherein in the eviction operation, the buffer manager further issues a write request to the solid-state storage and writes the buffer data item to the solid-state storage based on a dirty indicator of the buffer data item.

9. The apparatus of claim 7 or 8, wherein in the eviction operation, the buffer manager further writes the tail block from the buffer to a garbage collector buffer based on a relocation indicator of the buffer data item.

10. The apparatus of any one of claims 1 to 9, wherein the buffer is organized as an N-way set associative structure.

11. A method comprising:
storing data corresponding to a solid-state storage in a first-in-first-out, FIFO, buffer;
storing metadata information in a metadata structure, the metadata including a usage scheme related to the data in the buffer; and
managing the buffer and the metadata structure based on the metadata information in response to an access request having an access address,
wherein managing comprises performing an access response including one of a write access or a read access to the buffer, and
wherein the access request is one of a miss or a hit.

12. The method of claim 11, wherein the usage scheme corresponds to a buffer data item and includes at least one of a valid indicator that indicates a valid status, a dirty indicator that indicates a modified status, and a relocation indicator that indicates a relocation status.

13. The method of claim 11 or 12, wherein the solid-state storage is a wide-input/output, Wide-IO, NAND storage.

14. The method of any one of claims 11 to 13, wherein managing comprises issuing a read request, upon a miss, to the solid-state storage to obtain storage data.

15. A system comprising:
a host processor;
a solid-state storage; and
a buffer control and management circuit, comprising the apparatus of any one of claims 1 to 10.
